# EUROPEAN PATENT APPLICATION

(11) **EP 4 796 896 A1**
(43) Date of publication of application: **26.08.2026**
(21) Application number: 26158076.5
(22) Date of filing: 12.02.2026
(51) Int. Cl.: G01B 15/02

(54) **RADIATION SOURCE UNIT AND MEASUREMENT APPARATUS**

(30) Priority: 19.02.2025 JP 2025025094
(71) Applicant: Yokogawa Electric Corporation, Musashino-shi, Tokyo 180-8750 (JP)
(72) Inventor: NISHIDA, Kazufumi, Musashino-shi, Tokyo 180-8750 (JP)
(74) Representative: Winter, Brandl - Partnerschaft mbB

(57) **Abstract**

A radiation source unit 2 includes a radiation source section 4 that emits radiation and that has a first surface 41a, a detection section 5 that is arranged together with the radiation source section 4 with a space between the detection section 5 and the radiation source section 4 and that has a second surface 52a that faces the first surface 41a in which the radiation is detected, and a shielding plate 6 that is provided between the first surface 41a and the second surface 52a. On the first surface 41a, an opening 41b that is formed in a shape in which a first direction is a longitudinal direction and a second direction perpendicular to the first direction is a transverse direction. The shielding plate 6 is formed in a shape that includes at least a part of a diamond shape when viewed in a third direction that is perpendicular to the first direction and the second direction, and is arranged such that a center line of the opening 41b in the second direction overlaps with a shorter diagonal line of the diamond shape.

## Description

### CROSS-REFERENCE TO RELATED APPLICATION

The present application claims priority to and incorporates by reference the entire contents of Japanese Patent Application No. 2025-025094 filed in Japan on February 19, 2025.

### FIELD

The present disclosure relates to a radiation source unit and a measurement apparatus.

### BACKGROUND

There is a known radiation source unit that is used at the time of a measurement of a sheet thickness of an object to be measured performed by using radiation. The radiation source unit includes a radiation source section and a detection section. The radiation source section emits the radiation toward the detection section. The detection section detects a radiation dose of the radiation emitted from the radiation source section.

When the object to be measured is allowed to pass between the radiation source section and the detection section, the radiation is attenuated when the radiation is transmitted through the object to be measured, so that the radiation dose that is to be detected by the detection section decreases. An amount of attenuation of the radiation is proportional to the sheet thickness (basis weight) of the object to be measured. Consequently, it is possible to measure the sheet thickness of the object to be measured by calculating, on the basis of the detection result obtained by the detection section, the amount of attenuation of the radiation indicated when the radiation is transmitted through the object to be measured.

The decrease in radiation dose that is to be detected by the detection section is also caused by a positional deviation between the radiation source section and the detection section. For example, in a case where the positions of the radiation source section and a position of the detection section deviate in a planar direction that is perpendicular to the direction from the radiation source section in the detection section, an amount of radiation travelling toward the position outside the range in which the detection section has good sensitivity increases, so that the radiation dose that is to be detected by the detection section decreases.

Furthermore, the radiation emitted from the radiation source section travels toward the detection section while spreading radially, so that, in a case where a distance between the radiation source section and the detection section increases, the amount of the radiation travelling toward the position outside the range in which the detection section has good sensitivity increases, and the radiation dose that is to be detected by the detection section accordingly decreases. Furthermore, in a case where the distance between the radiation source section and the detection section increases, an amount of air between the radiation source section and the detection section increases, so that the amount of attenuation of the radiation affected by the air also increases. For these reasons, in a case where the positions of the radiation source section and the position of the detection section deviate in the direction in which the distance between the radiation source section and the detection section increases, the radiation dose that is to be detected by the detection section also decreases.

In this way, a decrease in radiation dose that is detected by the detection section may occur caused by attenuation exhibited at the time at which radiation transmits through the object to be measured or caused by positional deviation between the radiation source section and the detection section. Therefore, in a case where it is identified that the decrease in radiation dose occurs caused by the attenuation exhibited at the time at which radiation transmits through the object to be measured in spite of the fact that the reduction in radiation dose occurs caused by the positional deviation between the radiation source section and the detection section, there has been a problem in that the amount of attenuation caused by the sheet thickness of the object to be measured is calculated larger than the actual value, and accordingly, an error in the measurement result of the sheet thickness becomes large.

Japanese Laid-open Patent Publication No. 2017-151053 discloses a configuration in which a plurality of detection sections are provided in order to correct the error in the measurement result caused by the positional deviation. With this configuration, the measurement result is corrected by measuring, in advance, a rate of change in the detection result of each of the detection sections exhibited at the time of the positional deviation between the radiation source section and the detection section.

However, with the configuration disclosed in Japanese Laid-open Patent Publication No. 2017-151053, by providing the plurality of detection sections, the configuration becomes complicated and the cost of manufacturing also increases. Furthermore, in some cases, the sensitivity and the characteristics of the detector may be changed over time, and the rate of change in the detection result caused by the positional deviation may consequently be changed depending on the change exhibited over time, so that it is difficult to maintain the accuracy of the measurement result in the long term.

An object of the present disclosure is to obtain a radiation source unit that is able to be used for a measurement of a sheet thickness of an object to be measured with a simple structure and with high accuracy.

### SUMMARY

A radiation source unit 2 includes a radiation source section 4 that emits radiation and that has a first surface 41a, a detection section 5 that is arranged together with the radiation source section 4 with a space between the detection section 5 and the radiation source section 4 and that has a second surface 52a that faces the first surface 41a in which the radiation is detected, and a shielding plate 6 that is provided between the first surface 41a and the second surface 52a. On the first surface 41a, an opening 41b that is formed in a shape in which a first direction is a longitudinal direction and a second direction perpendicular to the first direction is a transverse direction. The shielding plate 6 is formed in a shape that includes at least a part of a diamond shape when viewed in a third direction that is perpendicular to the first direction and the second direction, and is arranged such that a center line of the opening 41b in the second direction overlaps with a shorter diagonal line of the diamond shape.

### BRIEF DESCRIPTION OF THE DRAWINGS

FIG. 1 is a perspective view illustrating a schematic configuration of a measurement apparatus according to a first embodiment;
FIG. 2 is a cross-sectional view of a radiation source unit;
FIG. 3 is a diagram of a radiation source side housing when viewed in a Z direction;
FIG. 4 is a diagram illustrating a positional relationship among a second surface of a detection section, a shielding plate, and a radiation source side opening when viewed in the Z direction;
FIG. 5 is a diagram illustrating a functional configuration of the measurement apparatus;
FIG. 6 is a diagram schematically illustrating a positional deviation between the radiation source section and the detection section in the Z direction;
FIG. 7 is a diagram illustrating a relationship between a detected radiation dose and ΔZ;
FIG. 8 is a diagram schematically illustrating the positional deviation between the radiation source section and the detection section in the Z direction;
FIG. 9 is a diagram illustrating a relationship between a length of a minor axis of the shielding plate and a detected radiation dose;
FIG. 10 is a diagram schematically illustrating a positional deviation between the radiation source section and the detection section in a Y direction;
FIG. 11 is a diagram illustrating a relationship between the detected radiation dose and the positional deviation in the Y direction;
FIG. 12 is a diagram schematically illustrating a positional deviation between the radiation source section and the detection section in an X direction;
FIG. 13 is a diagram illustrating a relationship between the detected radiation dose and the positional deviation in the X direction in a case where the shielding plate is not provided;
FIG. 14 is a diagram illustrating a relationship between the detected radiation dose and the positional deviation in the X direction in a case where the shielding plate is provided; and
FIG. 15 is a diagram illustrating a modification of the shielding plate.

### DESCRIPTION OF EMBODIMENTS

Hereinafter, a radiation source unit and a measurement apparatus according to one embodiment disclosed in the present disclosure will be explained in detail below with reference to the accompanying drawings. Furthermore, the present invention is not limited to the embodiments described below.

### First embodiment

### Schematic configuration of measurement apparatus

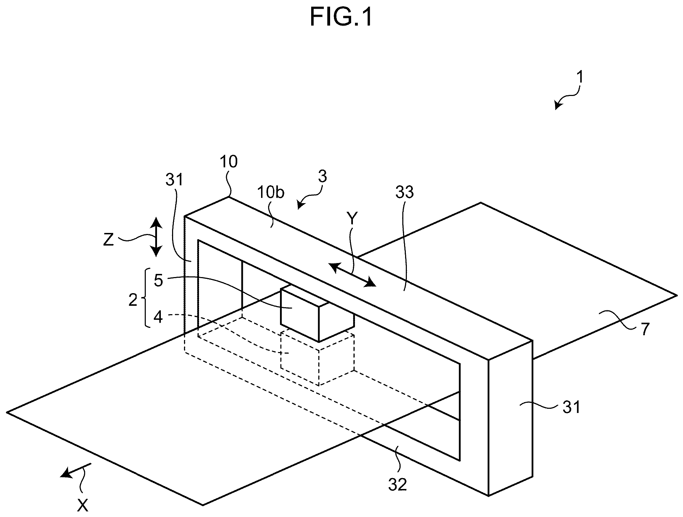

FIG. 1 is a perspective view illustrating a schematic configuration of a measurement apparatus according to a first embodiment. A measurement apparatus 1 includes a radiation source unit 2 and a scanning mechanism 3. The measurement apparatus 1 is an apparatus that measures a thickness of an object to be measured 7 that is in the form of a sheet. Examples of the object to be measured 7 include an electrode sheet or a separator sheet that is used for a secondary battery, a paper sheet, a plastic sheet for packaging, a building material sheet, a functional material sheet, an optical film, and a metal foil. For example, in a case where the object to be measured 7 is an electrode sheet, slurry is thinly and uniformly applied onto a top surface of an aluminum foil, and is then dried in the subsequent process. After the drying process has been performed, slurry is similarly applied to the back surface of the aluminum foil, and then, the drying process is performed. By measuring the thickness of the electrode sheet by using the measurement apparatus 1, a measurement of a coating weight (coating basis weight) of the aluminum foil is performed. The thickness of the object to be measured 7 is measured while being conveyed in a direction (a first direction) indicated by an arrow X illustrated in FIG. 1. In other words, the direction indicated by the arrow X corresponds to a conveyance direction in which the object to be measured 7 is conveyed. Furthermore, in the description below, the direction indicated by the arrow X is also simply referred to as an X direction.

### Radiation source unit

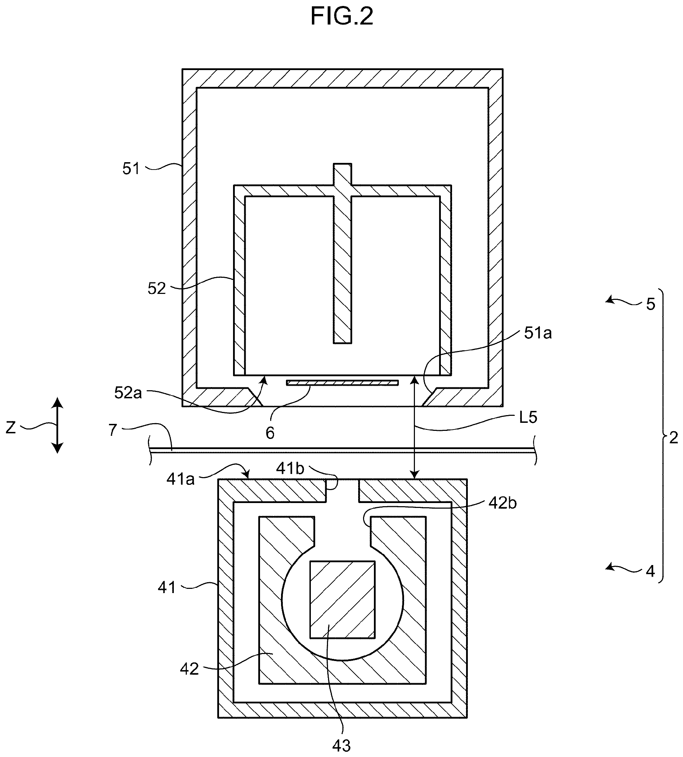

FIG. 2 is a cross-sectional view of the radiation source unit. The radiation source unit 2 includes a radiation source section 4, a detection section 5, and a shielding plate 6. The radiation source section 4 and the detection section 5 are arranged so as to be opposite each other with a space between the radiation source section 4 and the detection section 5. An array direction in which both of the radiation source section 4 and the detection section 5 are arrayed is indicated by an arrow Z (see also FIG. 1). Moreover, in the description below, a direction (a third direction) that is indicated by the arrow Z is also simply referred to as a Z direction.

### Radiation source section

The radiation source section 4 is a device that emits radiation toward the detection section 5. In the description below, a case in which β rays that are the radiation emitted from the radiation source section 4 will be described by using examples. The radiation source section 4 includes a radiation source side housing 41, a shutter mechanism 42, and a radioactive source 43.

### Radiation source side housing

The radiation source side housing 41 is a box body that is able to accommodate the shutter mechanism 42 and the radioactive source 43 in the interior of the radiation source side housing 41. The radiation source side housing 41 is made of, for example, a heavy metal. The heavy metal is, for example, tungsten, a tungsten alloy, copper tungsten, lead, a lead alloy, stainless, brass, or copper. In the radiation source side housing 41, a first surface 41a on which an opening is formed is provided. Moreover, in the description below, the opening that is formed on the first surface 41a of the radiation source side housing 41 is referred to as a radiation source side opening 41b. Furthermore, on the first surface 41a, a window foil (not illustrated) that covers the radiation source side opening 41b is provided. For example, the window foil is made of a polyethylene terephthalate (PET) film on which aluminum is vapor deposited, or is made of a titanium foil. As a result of using the window foil, it is possible to prevent dust or an external atmosphere from entering the radiation source side housing 41.

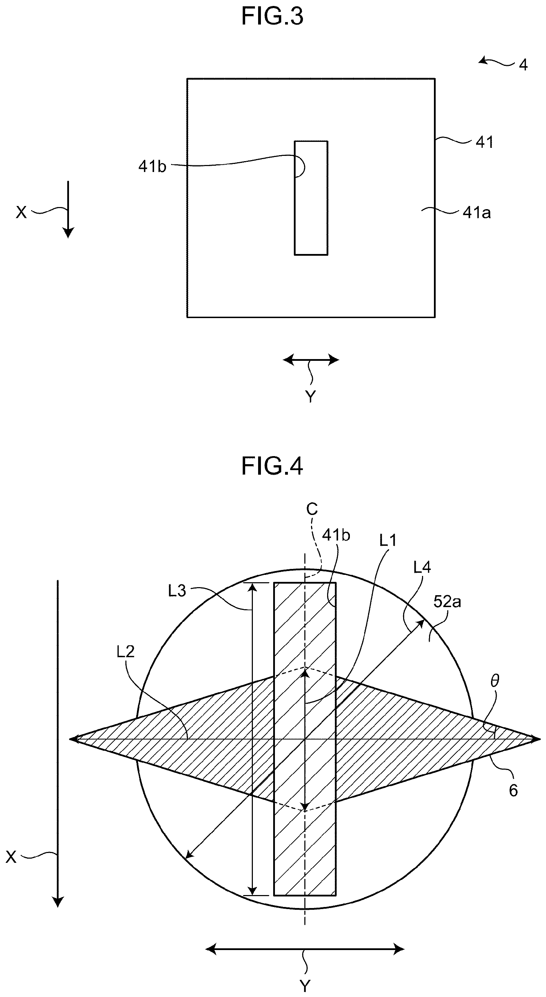

FIG. 3 is a diagram of a radiation source side housing when viewed in the Z direction. Here, a direction perpendicular to the X direction and the Z direction is indicated by an arrow Y (see also FIG. 1). Moreover, in the description below, the direction indicated by the arrow Y is also simply referred to as a Y direction. The radiation source side opening 41b is formed in a shape in which the X direction is a longitudinal direction and the Y direction is a short direction. Moreover, an example in which the radiation source side opening 41b is formed to have a rectangular shape is illustrated, but any shape may be used for the radiation source side opening 41b as long as the X direction is the longitudinal direction and the Y direction is the transverse direction, and, for example, an elliptical shape may be used.

### Sutter mechanism

A description will be given here by referring back to FIG. 2. The shutter mechanism 42 is accommodated in the interior of the radiation source side housing 41. The shutter mechanism 42 is made of, for example, a heavy metal. The heavy metal is, for examples tungsten, a tungsten alloy, copper tungsten, lead, a lead alloy, stainless, brass, or copper. In the shutter mechanism 42, an accommodation space 42a that is able to accommodate the radioactive source 43 in the interior of the accommodation space 42a is formed. In the shutter mechanism 42, an opening that communicates an outside of the shutter mechanism 42 and the accommodation space 42a is formed. In the description below, the opening formed in the shutter mechanism 42 is referred to as a shutter side opening 42b.

The shutter mechanism 42 is supported such that the orientation of the shutter mechanism 42 is able to be changed in the interior of the radiation source side housing 41. The shutter mechanism 42 is constituted to be able to change its orientation between an orientation in which the position of the shutter side opening 42b overlaps with the position of the radiation source side opening 41b and an orientation in which the position of the shutter side opening 42b does not overlap with the position of the radiation source side opening 41b.

### Radioactive source

The radioactive source 43 is accommodated in the accommodation space 42a that is formed in the shutter mechanism 42. The radioactive source 43 emits β rays that are radiation. The radioactive source 43 is an airtight container that contains, for example, radioactive gas in a sealed manner. The radioactive gas is, for example, Krypton-85 (85kr) that is a nuclide that emits β rays. The airtight container is a container that is made of, for example, stainless steel and that is sealed by a foil made of stainless steel. Moreover, the airtight container may be a capsule made of beryllium. Furthermore, the radiation emitted from the radioactive source 43 is not limited to β rays.

### Regarding emission of β rays from radiation source section

When the position of the shutter side opening 42b and the position of the radiation source side opening 41b match each other on the basis of the orientation of the shutter mechanism 42, the β rays radiated from the radioactive source 43 are emitted to an outside of the radiation source section 4 through the radiation source side opening 41b. The first surface 41a on which the radiation source side opening 41b is formed becomes an emission surface through which the β rays are emitted. The β rays emitted from the radiation source side opening 41b travels toward the detection section 5 while spreading radially.

When the position of the shutter side opening 42b and the position of the radiation source side opening 41b do not match each other on the basis of the orientation of the shutter mechanism 42, the β rays radiated from the radioactive source 43 are blocked by a surface of a wall of the shutter mechanism and are not emitted to an outside of the radiation source section 4. Moreover, a configuration of the shutter mechanism 42 is not limited to the exemplified configuration and any configuration may be used as long as the shutter mechanism 42 is configured to be able to switch a state in which the β rays are emitted from the radiation source section 4 and a state in which the β rays are not emitted from the radiation source section 4.

### Detection section

The detection section 5 is arranged together with the radiation source section 4 with a space between the detection section 5 and the radiation source section 4. The detection section 5 is arranged so as to be opposite the first surface 41a of the radiation source section 4. The detection section 5 includes a detection side housing 51 and a detector 52.

### Detection side housing

The detection side housing 51 is a box body that is able to accommodate the detector 52 in the interior of the detection side housing 51. In the detection side housing 51, an opening is formed. Moreover, in the description below, the opening that is formed in the detection side housing 51 is referred to as a detection side opening 51a. In the detection side housing 51, the detection side opening 51a is arranged so as to be opposite the first surface 41a side of the radiation source section 4. Furthermore, in the detection side housing 51, a window foil (not illustrated) that covers the detection side opening 51a may be provided. For example, the window foil is made of a polyethylene terephthalate (PET) film on which aluminum is vapor deposited. As a result of using the window foil, it is possible to prevent dust or an external atmosphere from entering the detection side housing 51.

### Detector

The detector 52 is accommodated in the interior of the detection side housing 51. The detector 52 is, for example, a detector with a type of ionization chamber. The detector 52 includes a second surface 52a that is a detection surface. The second surface 52a is an area that has the sensitivity to β rays among the surfaces facing the first surface 41a side of the detector 52. The detector 52 detects a radiation dose of the β rays emitted from the radiation source section 4. In the radiation source unit 2, the first surface 41a of the radiation source section 4 and the second surface 52a of the detection section 5 are arranged opposite each other.

### Shielding plate

The shielding plate 6 is attached to the detection section 5. The shielding plate 6 is provided between the first surface 41a of the radiation source section 4 and the second surface 52a of the detection section 5. The shielding plate 6 shields some of radiation that is incident on the second surface 52a.

FIG. 4 is a diagram illustrating a positional relationship among the second surface of the detection section, the shielding plate, and the radiation source side opening when viewed in the Z direction. The shape of the shielding plate 6 is a diamond shape. In the description below, between the two diagonal lines of the diamond shape, the shorter diagonal line is referred to as a minor axis, and the longer diagonal line is referred to as a major axis. The shielding plate 6 is arranged at a position in which the minor axis of the diamond shape overlaps with a center line C of the radiation source side opening 41b in the Y direction. Moreover, the shape of the diamond shape or the like will be described later.

### Scanning mechanism

A description will be given here by referring back to FIG. 1. The scanning mechanism 3 includes two support pillars 31, a first rail 32, and a second rail 33. The two support pillars 31 are arranged on both sides of the radiation source unit 2 in the Y direction. The first rail 32 extends in the Y direction, and is supported by the two support pillars 31. The first rail 32 movably supports the radiation source section 4 in the Y direction. The second rail 33 extends in the Y direction, and is supported by the two support pillars 31. The second rail 33 movably supports the detection section 5 in the Y direction.

The scanning mechanism 3 causes the radiation source unit 2 by using a drive device, such as a motor that is not illustrated, to perform a scan in the Y direction. The Y direction becomes a scanning direction of the radiation source unit 2 included in the measurement apparatus 1. Furthermore, the scanning mechanism 3 causes the radiation source unit 2 to perform a scan in the Y direction while maintaining the relative position between the radiation source section 4 and the detection section 5. In other words, the radiation source unit 2 is operated to scan by the scanning mechanism 3 such that the positional relationship in which the minor axis of the shielding plate 6 matches the center line C of the radiation source side opening 41b in the Z direction.

### Measurement of sheet thickness

At the time of a measurement of the sheet thickness of the object to be measured 7, the object to be measured 7 that is being conveyed passes between the radiation source section 4 and the detection section 5. The β rays emitted from the radiation source section 4 are incident on the second surface 52a of the detection section 5 after transmitting through the object to be measured 7. The β rays are attenuated when transmitting through the object to be measured 7, so that the radiation dose of the β rays that are detected by the detection section 5 decreases. An amount of attenuation of the β rays is proportional to the sheet thickness (basis weight) of the object to be measured 8. Consequently, it is possible to measure the sheet thickness of the object to be measured 7 by calculating, on the basis of the detection result obtained by the detection section 5, the amount of attenuation of the β rays indicated when the β rays are transmitted through the object to be measured 7. Furthermore, it is possible to measure the sheet thickness of the object to be measured 7 over a wide range by scanning the radiation source unit 2 in the Y direction while conveying the object to be measured 7 in the X direction.

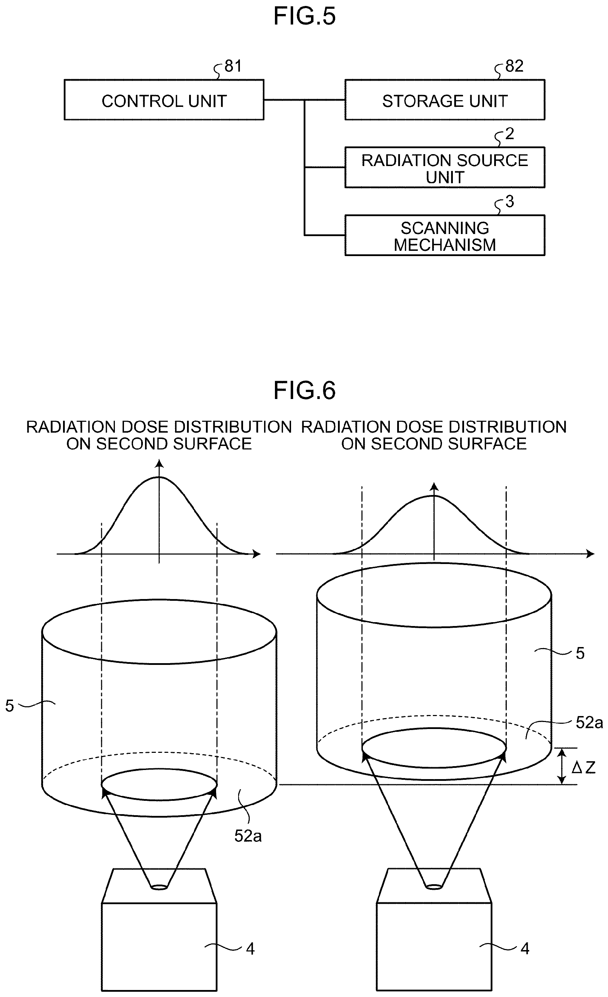

FIG. 5 is a diagram illustrating a functional configuration of the measurement apparatus. A storage unit 82 stores therein table information in which the amount of attenuation of the β rays is associated with the sheet thickness and also stores therein various kinds of information on programs or the like. A control unit 81 controls an operation of the measurement apparatus 1 on the basis of the program that has been read out from the storage unit 82. For example, the control unit 81 causes the radiation source unit 2 to perform a scan while the object to be measured 7 is being conveyed. The control unit 81 calculates an amount of attenuation on the basis of the radiation dose of the β rays detected by the detection section 5. The control unit 81 refers to the table information that has been stored in the storage unit 82, and calculates the sheet thickness of the object to be measured 7 on the basis of the calculated amount of attenuation.

An example of the storage unit 82 includes a storage device, such as a random access memory (RAM), a read only memory (ROM), a flash memory, an erasable programmable read only memory (EPROM), or an electrically erasable programmable read only memory (EEPROM) (registered trademark). An example of the control unit 81 includes an arithmetic unit, such as a microprocessor, a microcomputer, a central processing unit (CPU), or a digital signal processor (DSP).

### Regarding decrease in amount of radiation occurring caused by positional deviation between radiation source section and detection section

The relative position relationship between the radiation source section 4 and the detection section 5 is configured to be maintained regardless whether or not the radiation source unit 2 is allowed to perform a scan, but there may be a case in which a positional deviation occurs between the radiation source section 4 and the detection section 5 due to some factor.

When a positional deviation occurs between the radiation source section 4 and the detection section 5, the radiation dose that is detected by the detection section 5 decreases for the reason that the β rays that are incident within the range with good sensitivity of the second surface 52a of the detection section 5 decrease, or the like. Therefore, in addition to a decrease in radiation dose caused by the attenuation at the time at which the β rays transmit through the object to be measured 7, in some cases, an error may occur in the measurement accuracy of the sheet thickness as a result of a decrease in the radiation dose caused by the positional deviation. In the measurement apparatus 1 according to the present disclosure, by covering a part of the second surface 52a of the detector 52 by the shielding plate 6, an amount of decrease in radiation dose caused by the positional deviation is suppressed. The type of positional deviation between the radiation source section 4 and the detection section 5 includes a positional deviation in the Z direction that is an array direction of the radiation source section 4 and the detection section 5, in the Y direction that is the scanning direction of the radiation source unit 2, and in the X direction that is the conveyance direction of the object to be measured 7. In the following, the relationship between the above described positional deviations and an amount of decrease in radiation dose will be described.

### Regarding decrease in radiation dose caused by positional deviation in Z direction and suppression of amount of decrease in radiation dose

FIG. 6 is a diagram schematically illustrating a positional deviation between the radiation source section and the detection section in the Z direction. FIG. 6 illustrates side by side each of distributions of the radiation dose that is to be detected at the second surface 52a when a positional deviation of ΔZ occurs in both of the radiation source section 4 and the detection section 5 in the Z direction. As a result of the occurrence of the positional deviation of ΔZ in the Z direction, an amount of β rays incident outside the range with good sensitivity increases, and an amount of β rays incident inside the range with good sensitivity decreases. Furthermore, when the positional deviation of ΔZ occurs in both of the radiation source section 4 and the detection section 5 in the Z direction, an amount of air between the radiation source section 4 and the detection section 5 increases, so that an amount of attenuation of radiation caused by the air also increases. As a result of this, a peak value of the radiation dose that is to be detected increases.

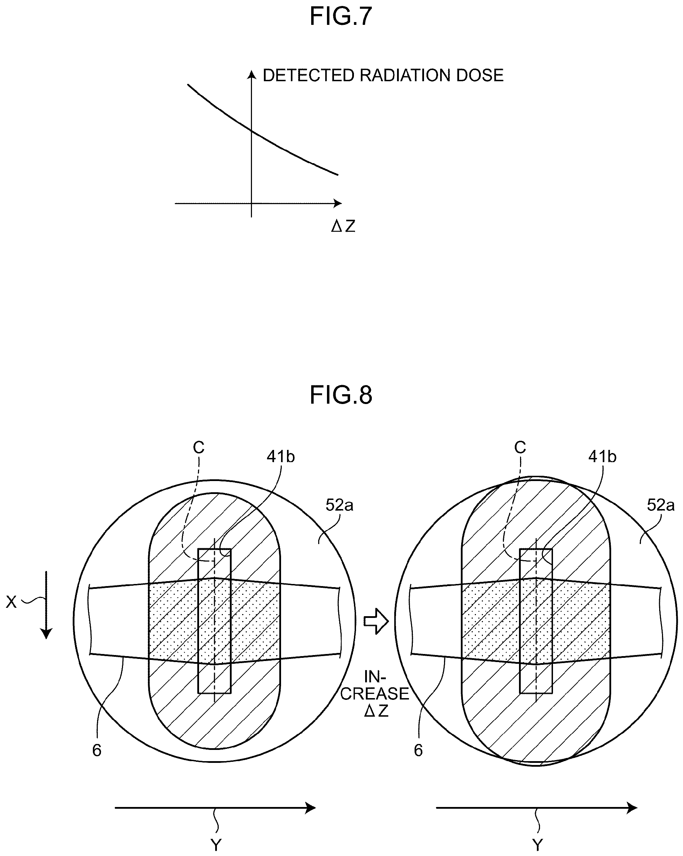

FIG. 7 is a diagram illustrating a relationship between the detected radiation dose and the ΔZ. As illustrated in FIG. 7, if ΔZ increases, that is, if a space between the radiation source section 4 and the detection section 5 increases, the radiation dose that is to be detected decreases. In other words, is a space between the radiation source section 4 and the detection section 5 increases caused by the positional deviation, an amount of decrease in the radiation dose that is to be detected increases, and an error in the sheet thickness to be calculated tends to increase.

FIG. 8 is a diagram schematically illustrating a positional deviation between the radiation source section and the detection section in the Z direction. In FIG. 8, an incident area of the β rays on the second surface 52a in a case where the shielding plate 6 is not provided is indicated by using hatching. Furthermore, in the hatched incident area, an area in which the radiation dose of incident β rays decreases caused by the area being shielded by the shielding plate 6 is indicated by using dot hatching.

As illustrated in FIG. 8, if a positional deviation in the Z direction occurs, an incident area of the β rays on the second surface 52a increases. On the other hand, the square measure of the shielding plate 6 that covers the second surface 52a does not change even when the positional deviation in the Z direction occurs. In other words, when the positional deviation in the Z direction occurs, the square measure of the shielding plate 6 remains unchanged, while the incident area of the β rays increases. Therefore, when the positional deviation in the Z direction occurs, the square measure in which the shielding plate 6 overlaps the incident area of the β rays becomes relatively smaller.

Therefore, as a result of the shielding plate 6 being provided, even if there is a decrease in β rays that are incident on the range with good sensitivity and a reduction in peak value caused by a positional deviation in the Z direction, it is possible to suppress an amount of decrease in the β rays by increasing the incident of the β rays onto the second surface 52a.

Furthermore, the peak value of the radiation dose is also suppressed as a result of the center part of the second surface 52a in which the peak value of the radiation dose is detected being covered by the shielding plate 6 in a case where the shielding plate 6 is not provided. In a case where the center part of the second surface 52a is not covered by the shielding plate 6, an amount of decrease in radiation dose before and after the positional deviation in the Z direction becomes the largest at the center part in which the peak value is detected, the amount of decrease in radiation dose at this part is also reduced as a result of a decrease in the amount of decrease in radiation detected at the center part by the shielding plate 6. As a result of this, it is possible to further suppress a decrease in the total amount of the β rays before and after the positional deviation in the Z direction. In other words, it is possible to improve the measurement accuracy of the sheet thickness by suppressing the amount of decrease in β rays to be detected.

Here, the amount of decrease in β rays is changed in accordance with the square measure of the area in which the second surface 52a is covered by the shielding plate 6. The square measure of the area in which the second surface 52a is covered by the shielding plate 6 is able to be changed in accordance with the length of the minor axis of the shielding plate 6.

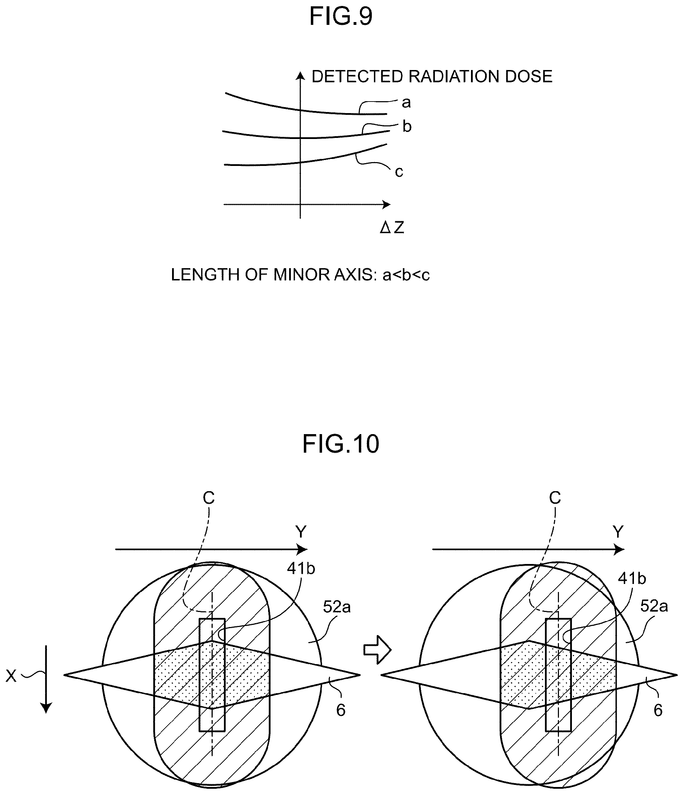

FIG. 9 is a diagram illustrating a relationship between the length of the minor axis of the shielding plate and the detected radiation dose. As illustrated in FIG. 9, it can be found that it is possible to adjust an increase or a decrease in radiation dose of the β rays with respect to a change in ΔZ by the length of the minor axis. In other words, the length of the minor axis of the shielding plate 6 functions as a parameter for adjusting the amount of decrease in β rays caused by the positional deviation in the Z direction.

Regarding decrease in radiation dose caused by positional deviation toward Y direction and suppression of amount of decrease in radiation dose

FIG. 10 is a diagram schematically illustrating a positional deviation between the radiation source section and the detection section in the Y direction. As illustrated in FIG. 10, as a result of the radiation source side opening 41b deviating in the Y direction together with the radiation source section 4, the incident area of the β rays also deviates in the Y direction. As a result of this, an amount of β rays incident on a part of the second surface 52a having good sensitivity decreases, and also, an amount of β rays travelling toward an outside of the second surface 52a increases, and the radiation dose that is detected by the second surface 52a accordingly decreases.

In the radiation source unit 2 according to the present disclosure, the peak value of the radiation dose is also suppressed as a result of the center part of the second surface 52a in which the peak value of the radiation dose is detected being covered by the shielding plate 6 in a case where the shielding plate 6 is not provided. Therefore, it is possible to suppress an amount of decrease in detected radiation dose caused by a decrease in β rays that is incident on the center part having good sensitivity caused by the positional deviation in the Y direction.

Furthermore, as a result of the shielding plate 6 being formed in the diamond shape, the square measure in which the second surface 52a is covered by the shielding plate 6 decreases as the second surface 52a is away from the center line C of the radiation source side opening 41b in the Y direction. As a result of this, when the incident area of the β rays moves in the Y direction caused by the positional deviation in the Y direction, a ratio of the square measure that is covered by the shielding plate 6 to the incident area decreases. Therefore, it is possible to suppress a decrease in incident area when the incident area of the β rays moves in the Y direction caused by the positional deviation in the Y direction, and it is possible to suppress an amount of decrease in detected radiation dose.

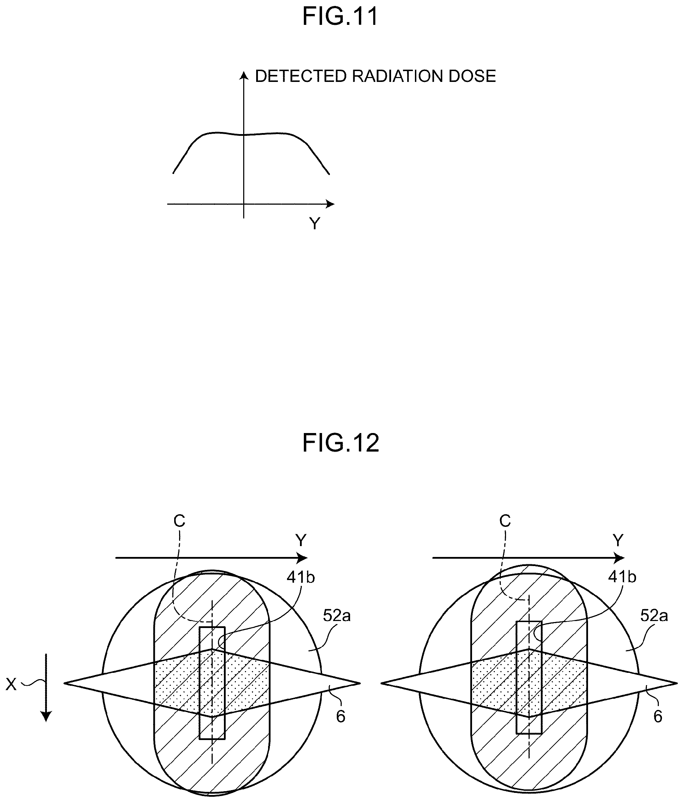

FIG. 11 is a diagram illustrating a relationship between the detected radiation dose and the positional deviation in the Y direction. As illustrated in FIG. 11, it is possible to suppress a decrease in radiation dose within a certain range related to the positional deviation in the Y direction. Moreover, at the time of positional deviation exceeding the certain range, an amount of decrease also increases as a result of an increase in amount of β rays travelling toward the outside of the second surface 52a. However, the radiation source unit 2 is scanned such that the relative position between the radiation source section 4 and the detection section 5 are maintained, so that a positional deviation exceeding the certain range is unlikely to occur, an increase in amount of decrease occurring outside the certain range is not a problem.

A degree of decrease in the incident area caused by the positional deviation in the Y direction is able to be adjusted by an angle θ of the diamond shape. In other words, the angle θ of the shielding plate 6 functions as the parameter for adjusting an amount of decrease in β rays caused by the positional deviation in the Y direction.

### Regarding decrease in radiation dose caused by positional deviation toward X direction and suppression of amount of decrease in radiation dose

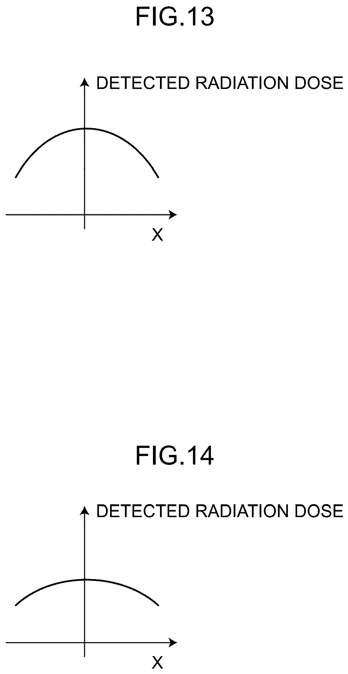

FIG. 12 is a diagram schematically illustrating a positional deviation between the radiation source section and the detection section in the X direction. FIG. 13 is a diagram illustrating a relationship between the detected radiation dose and the positional deviation in the X direction in a case where the shielding plate is not provided. FIG. 14 is a diagram illustrating a relationship between the detected radiation dose and the positional deviation in the X direction in a case where the shielding plate is provided. As illustrated in FIG. 12, as a result of the radiation source side opening 41b deviates in the X direction together with the radiation source section 4, the incident area of the β rays also deviates in the X direction. As a result of this, an amount of β rays incident on the center part of the second surface 52a having good sensitivity decreases, and also, an amount of β rays travelling toward an outside of the second surface 52a increases, and the radiation dose that is detected by the second surface 52a accordingly decreases.

In the radiation source unit 2 according to the present disclosure, the peak value of the radiation dose is also suppressed as a result of the center part of the second surface 52a in which the peak value of the radiation dose is detected being covered by the shielding plate 6 in a case where the shielding plate 6 is not provided. As illustrated in FIG. 13 and FIG. 14, by providing the shielding plate 6, it is possible to suppress an amount of decrease in radiation dose caused by a decrease in β rays entering the vicinity of the center caused by the positional deviation in the X direction.

Furthermore, in the measurement apparatus 1, as compared with a positional deviation in the scanning direction of the radiation source unit 2, that is, in the Y direction that is a direction of a movement of both of the radiation source section 4 and the detection section 5, a positional deviation between the radiation source section 4 and the detection section 5 in the X direction that is a conveyance direction is unlikely to occur.

Therefore, it is possible to suppress an influence on the measurement accuracy of the amount of attenuation of the radiation dose caused by the positional deviation in the X direction by installing the shielding plate 6 in which the length of the minor axis and the angle θ have been adjusted in order to suppress the amount of attenuation caused by the positional deviation in each of the Z direction and the Y direction.

### Summary of suppression effect of amount decrease in detected radiation dose using shielding plate

As described above, it is possible to improve the measurement accuracy of the sheet thickness of the object to be measured 7 by suppressing an amount of decrease in radiation dose caused by the positional deviation with a simple structure in which the shielding plate 6 is provided between the radiation source section 4 and the detection section 5 and covers a part of the second surface 52a.

Furthermore, when a shape and a size of the shielding plate 6 is designed, it is possible to use the parameter for suppressing an amount of decrease in radiation dose caused by the positional deviation in the Z direction as the length of the minor axis, and it is possible to use the parameter for suppressing an amount of decrease in radiation dose caused by the positional deviation in the Y direction as the angle θ. In this way, the parameter for coping with the positional deviation in the Z direction and the parameter for coping with the positional deviation in the Y direction are independently used. For example, in a case where the length of the minor axis functions as the parameter for coping with both of the positional deviation in the Y direction and the positional deviation in the Z-axis direction, there may be a case in which it is not possible to sufficiently suppress a decrease in radiation dose in a case where a positional deviation in the Z-axis direction occurs related to the length of the minor axis that has been determined in order to cope with the positional deviation in the Y direction. In this case, there is a need to determine the length of the minor axis by considering the balance between both of the positional deviations, so that it is difficult to design the shape and the size of the shielding plate 6. On the other hand, in the present disclosure, the parameter for coping with the positional deviation in the Z direction, and the parameter for coping with the positional deviation in the Y direction are independently used, it is possible to easily determine each of the parameters. As a result of this, it is possible to simplify the shape and the size of the shielding plate 6.

### Other effects

The radiation source side opening 41b is formed in a shape in which the X direction is a longitudinal direction and the Y direction is a transverse direction, so that it is possible to improve thickness measurement resolution of in the Y-axis direction that is the scanning direction.

Furthermore, there is no need to provide a plurality of sensors in order to correct the positional deviation between the radiation source section 4 and the detection section 5, so that it is possible to simplify the structure of the radiation source unit 2 and reduce the weight of the radiation source unit 2. By reducing the weight of the radiation source unit 2, it is possible to simplify the structure of the scanning mechanism 3 that supports the radiation source unit 2 and reduce the weight of the scanning mechanism 3.

### Embodiment of shielding plate

It is preferable that the thickness of the shielding plate 6 is equal to or greater than the half-value layer of the radioactive source. For example, in a case where radioactive gas that is sealed within the radioactive source 43 is Krypton-85, the thickness of a shielding plate 63 is preferably be equal to or greater than 230g/m².

Furthermore, in a case where the length of the minor axis of the shielding plate 6 is denoted by L1, the length of the major axis is denoted by L2, the length of the radiation source side opening 41b in the X direction is denoted by L3, and the diameter of the detection range of the radiation on the second surface is denoted by L4 (see also FIG. 4), it is preferable that L1/L2 that is a ratio of diagonal lines of the diamond shape satisfies the relationship of 0.3 × L3/L4 < L1/L2 < 0.9 × L3/L4. For example, in a case where L3 is 20 mm and L4 is 53 mm, the relationship of 0.11 < L1/L2 < 0.34 is satisfied. The angle θ at this time is in a range between 6.4° and 18.8°.

For example, by conducting experiments with varying lengths of the major axis to fall within the above described range related to L1/L2 after having determined the length of the minor axis of the shielding plate 6 that is the parameter for coping with the positional deviation in the Z direction, it is possible to reduce the number of trials in the experiment conducted in order to determine the shape of the shielding plate 6.

Furthermore, in a case where the distance between the first surface 41a of the radiation source section 4 and the second surface 52a of the detection section 5 is denoted by L5, it is preferable that L1 that denotes the length of the minor axis of the shielding plate 6 satisfies the relationship of 0.4 × L5 < L1 < 1.0 × L5. For example, in a case where L5 is 38 mm, L1 that denotes the length of the minor axis is in the range between 15 mm to 38 mm.

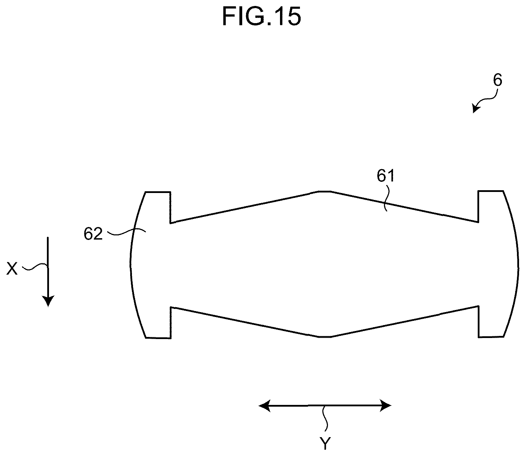

FIG. 15 is a diagram illustrating a modification of the shielding plate. The shielding plate 6 according to the modification includes a central portion 61 that corresponds to a part of the diamond shape constituted such that ends of the diamond shape in the Y direction have been cut out, and an attachment unit 62 that is provided at both ends of the central portion 61. Each of the attachment units 62 corresponds to a portion that is attached to the detection section 5 when the shielding plate 6 is attached to the detection section 5. The width of the attachment unit 62 in the X direction is formed to be greater than the width of the end of the central portion 61 in the X direction. As a result of this, it is possible to easily perform an installation process onto the detection section 5.

### Others

Moreover, the scanning mechanism 3 for scanning the radiation source unit 2 need not be provided in the measurement apparatus 1. In this case, the positional deviation caused by the scanning between the radiation source section 4 and the detection section 5 does not occur. However, in some cases, a positional deviation may occur between the radiation source section 4 and the detection section 5 caused by aging or temperature changes. Therefore, even in a case where the scanning mechanism 3 is not provided in the measurement apparatus 1, it is possible to suppress an amount of decrease in detected radiation dose caused by the positional deviation by providing the shielding plate 6.

Furthermore, in order to adjust an amount of transmission of β rays at the shielding plate 6, a plurality of holes may be formed on the shielding plate 6.

### Others

Some examples of combinations of the disclosed technical features will be described below.
(1) A radiation source unit comprising: a radiation source section that emits radiation and that has a first surface; a detection section that is arranged together with the radiation source section with a space between the detection section and the radiation source section and that has a second surface that faces the first surface in which the radiation is detected; and a shielding plate that is provided between the first surface and the second surface by being attached to the detection section, wherein on the first surface, an opening that is formed in a shape in which a first direction is a longitudinal direction and a second direction perpendicular to the first direction is a transverse direction and from which the radiation is emitted toward the second surface, and the shielding plate is formed in a shape that includes at least a part of a diamond shape when viewed in a third direction that is perpendicular to the first direction and the second direction, and is arranged such that a center line of the opening in the second direction overlaps with a shorter diagonal line of the diamond shape.
(2) The radiation source unit according to (1), wherein the shielding plate includes an attachment unit that is provided at an end of the shielding plate along the second direction and that is fixed to the detection section.
(3) The radiation source unit according to (1) or (2), wherein in the radiation source section, a radioactive source that radiates the radiation is accommodated, and a thickness of the shielding plate is equal to or greater than a half value-layer of the radiation radiated from the radioactive source.
(4) The radiation source unit according to (3), wherein the radioactive source is Krypton-85, and the thickness of the shielding plate is equal to or greater than 230g/m².
(5) The radiation source unit according to (1), wherein, in a case where, a length of the shorter diagonal line of diamond shape included in the shielding plate is denoted by L1, and a length of a longer diagonal line is denoted by L2, a length of the opening in the first direction is denoted by L3, a detection range of the radiation at the second surface is a round shape, and a diameter of the detection range is denoted by L4, L1/L2 that is a ratio of the diagonal lines of the diamond shape is in a range of 0.3 × L3/L4 < L1/L2 < 0.9 × L3/L4.
(6) The radiation source unit according to (1), wherein, in a case where, a distance between the first surface and the second surface is denoted by L5, and a length of the shorter diagonal line of the diamond shape included in the shielding plate is denoted by L1, a relationship of 0.4 × L5 < L1 < 1.0 × L5 is satisfied.
(7) The radiation source unit according to any one of (1) to (6), wherein the radiation source section includes a shutter mechanism that switches emission and shielding of the radiation.
(8) A measurement apparatus comprising: the radiation source unit according to any one of (1) to (7); and a control unit that calculates a sheet thickness of an object to be measured that passes between the radiation source section and the detection section based on a detection result obtained by the detection section.
(9) The measurement apparatus according to (8), further comprising a scanning mechanism that causes the radiation source unit to perform a scan in the second direction.

According to the present disclosure, an advantage is provided in that it is possible to obtain a radiation source unit that is able to be used for a measurement of a sheet thickness of an object to be measured with a simple structure and with high accuracy.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. A radiation source unit (2) comprising:
a radiation source section (4) that emits radiation and that has a first surface (41a);
a detection section (5) that is arranged together with the radiation source section with a space between the detection section and the radiation source section and that has a second surface (52a) that faces the first surface in which the radiation is detected; and
a shielding plate (6) that is provided between the first surface and the second surface by being attached to the detection section, wherein
on the first surface, an opening (41b) that is formed in a shape in which a first direction is a longitudinal direction and a second direction perpendicular to the first direction is a transverse direction and from which the radiation is emitted toward the second surface, and
the shielding plate is formed in a shape that includes at least a part of a diamond shape when viewed in a third direction that is perpendicular to the first direction and the second direction, and is arranged such that a center line (C) of the opening in the second direction overlaps with a shorter diagonal line of the diamond shape.

2. The radiation source unit according to claim 1, wherein the shielding plate includes an attachment unit (62) that is provided at an end of the shielding plate along the second direction and that is fixed to the detection section.

3. The radiation source unit according to claims 1 or 2, wherein
in the radiation source section, a radioactive source (43) that radiates the radiation is accommodated, and
a thickness of the shielding plate is equal to or greater than a half-value layer of the radiation radiated from the radioactive source.

4. The radiation source unit according to claim 3, wherein
the radioactive source is Krypton-85, and
the thickness of the shielding plate is equal to or greater than 230g/m².

5. The radiation source unit according to claim 1, wherein,
in a case where,
a length of the shorter diagonal line of diamond shape included in the shielding plate is denoted by L1, and a length of a longer diagonal line is denoted by L2,
a length of the opening in the first direction is denoted by L3,
a detection range of the radiation at the second surface is a round shape, and
a diameter of the detection range is denoted by L4,
L1/L2 that is a ratio of the diagonal lines of the diamond shape is in a range of 0.3 × L3/L4 < L1/L2 < 0.9 × L3/L4.

6. The radiation source unit according to claim 1, wherein,
in a case where,
a distance between the first surface and the second surface is denoted by L5, and
a length of the shorter diagonal line of the diamond shape included in the shielding plate is denoted by L1,
a relationship of 0.4 × L5 < L1 < 1.0 × L5 is satisfied.

7. The radiation source unit according to any one of claims 1 to 6, wherein the radiation source section includes a shutter mechanism (42) that switches emission and shielding of the radiation.

8. A measurement apparatus comprising:
the radiation source unit according to any one of claims 1 to 7; and
a control unit (81) that calculates a sheet thickness of an object to be measured (7) that passes between the radiation source section and the detection section based on a detection result obtained by the detection section.

9. The measurement apparatus according to claim 8, further comprising a scanning mechanism (3) that causes the radiation source unit to perform a scan in the second direction.
